Europäisches Patentamt

European Patent Office    (11) Numéro de publication : **0 107 545**

Office européen des brevets     **B1**

(19)

(12)       **FASCICULE DE BREVET EUROPÉEN**

(45) Date de publication du fascicule du brevet :
15.04.87

(51) Int. Cl.⁴ : **G 01 N 27/02**

(21) Numéro de dépôt : **83401881.4**

(22) Date de dépôt : **27.09.83**

(54) **Détecteur de concentration ionique dans un liquide.**

(30) Priorité : **28.09.82 FR 8216303**

(43) Date de publication de la demande :
**02.05.84 Bulletin 84/18**

(45) Mention de la délivrance du brevet :
**15.04.87 Bulletin 87/16**

(84) Etats contractants désignés :
**BE CH DE FR GB IT LI LU NL SE**

(56) Documents cités :
**DE-A- 2 822 943
DE-A- 3 030 069
DE-B- 1 281 567
US-A- 3 404 336
US-A- 4 138 639
MEASUREMENT TECHNIQUES, vol. 17, no. 11, novembre 1974, pages 1764-1767, New York, USA A.M. BUNYAK et al.: "Resonant LC circuit as a contactless conductometric converter"**

(73) Titulaire : **PHARMUKA LABORATOIRES
35 Quai du Moulin de Cage
F-92231 Gennevilliers (FR)**

(72) Inventeur : **Girot, Pierre Noel
7, rue Terrage
F-75010 Paris (FR)**
Inventeur : **Boschetti, Egisto
5, rue du Docteur Rochefort
F-78400 Chatou (FR)**

(74) Mandataire : **Joly, Jean-Jacques et al
CABINET BEAU DE LOMENIE 55, rue d'Amsterdam
F-75008 Paris (FR)**

EP 0 107 545 B1

Jouve, 18, rue St-Denis, 75001 Paris, France

## Description

La présente invention concerne un détecteur de concentration ionique dans un liquide.

Un domaine particulier mais non exclusif d'application de l'invention est celui de la détection de la concentration ou force ionique d'une solution aqueuse sortant d'une colonne de chromatographie.

Dans ce domaine, il a été proposé de réaliser des détecteurs de concentration ionique ou saline de type conductimètre mesurant les variations de conductivité du liquide circulant dans une sonde de mesure. Il a aussi été proposé de mesurer les variations de constante diélectrique du liquide en faisant passer celui-ci entre deux plaques formant les armatures d'un condensateur dont ont détecte les variations de capacité par exemple par mesure de la fréquence de résonance d'un circuit oscillant dans lequel ce condensateur est branché.

Dans ces appareils connus, le liquide est en contact avec des électrodes entre lesquelles existe une différence de potentiel. Il n'est pas toujours possible d'éviter des phénomènes d'électrolyse susceptibles de perturber la détection ou d'altérer les caractéristiques du liquide, ce qui peut être très gênant dans le cas de l'application à la chromatographie.

L'on connaît également des documents DE-A-3 030 069 et MEASUREMENT TECHNIQUES, vol. 17, n° 11, novembre 1974, pages 1764-1767 (A.M. BUNYAK et al : « Resonant LC circuit as a contactless conductometric converter ») des appareils de mesure de conductivité fonctionnant sans contact avec le liquide. Un circuit résonant comportant une bobine conductrice disposée autour d'une pièce tubulaire parcourue par le liquide dont la concentration est à mesurer est excité par le signal de sortie d'un oscillateur, et des moyens sont couplés au circuit résonant pour délivrer un signal de sortie représentent la concentration ionique du liquide. Toutefois, la précision de la mesure est affectée par les variations des conditions ambiantes.

Par ailleurs, le document US-A-4 138 639 divulgue un appareil utilisant un transformateur dont le primaire est excité par un oscillateur et dont le secondaire est couplé au primaire par le fluide et délivre un signal représentant la conductivité du fluide. Pour augmenter la précision de la mesure, le signal de sortie de l'oscillateur est stabilisé par contre-réaction à partir du signal d'un enroulement auxiliaire.

La présente invention a aussi pour but de fournir un détecteur de concentration ionique grâce auquel on peut disposer d'un signal électrique dont l'amplitude représente avec une précision accrue la concentration ionique du liquide dans la pièce tubulaire.

Ce but est atteint au moyen d'un appareil comportant une cellule de détection comprenant une pièce tubulaire en matériau électriquement isolant avec un passage central susceptible d'être alimenté en liquide dont la concentration est à mesurer ; et un circuit électrique comprenant un oscillateur, un premier circuit résonant comportant une bobine conductrice disposée autour de la pièce tubulaire et excité par le signal de sortie de l'oscillateur, et des moyens couplés au circuit résonant pour délivrer un signal de sortie dont les variations représentent les variations de concentration ionique du liquide dans la pièce tubulaire, appareil dans lequel, conformément à l'invention, le circuit électrique comprend un second circuit résonant de référence excité également par le signal de sortie de l'oscillateur et un comparateur recevant les signaux produits par les deux circuits résonants et fournissant un signal électrique dont l'amplitude représente la différence entre les signaux qu'il reçoit et varie en fonction de la concentration ionique du liquide dans la pièce tubulaire.

Grâce à l'utilisation d'un circuit résonant de référence, on peut s'affranchir de la dépendance de certaines caractéristiques des circuits vis à vis des conditions extérieures, notamment la température.

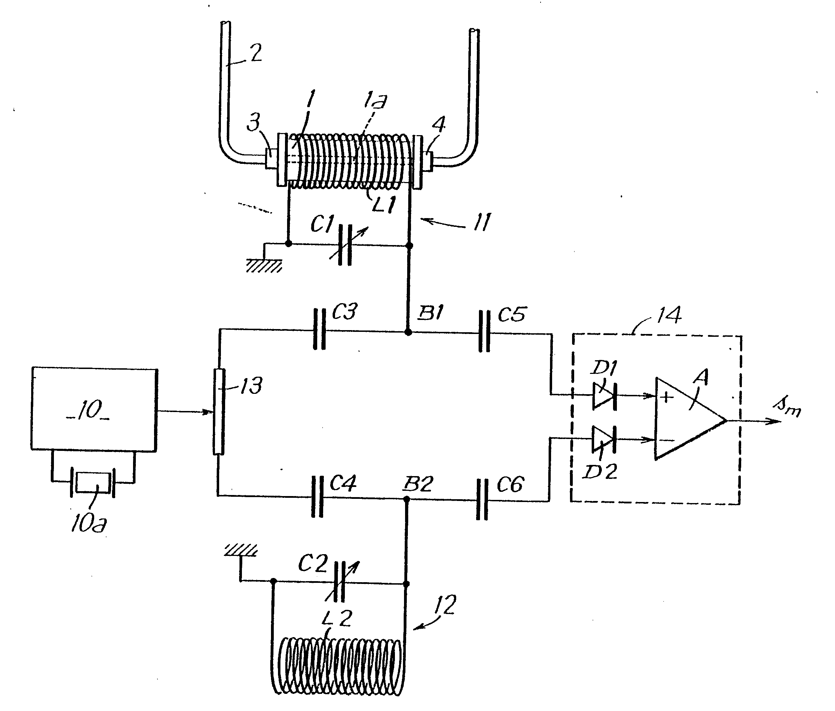

L'invention sera mieux comprise à la lecture de la description faite ci-après, à titre indicatif mais non limitatif, en référence au dessin annexé dont la figure unique est un schéma d'un mode particulier de réalisation d'un détecteur selon l'invention.

Le liquide dont la concentration ou force ionique est à mesurer, par exemple un liquide contenant une solution saline aqueuse sortant d'une colonne de chromatographie, traverse le passage central 1a d'une pièce tubulaire 1 formant cellule de détection. La pièce 1 est en matériau non conducteur de l'électricité, par exemple en verre, et est interposée sur une conduite 2 à laquelle elle est reliée par des raccords 3, 4.

Une bobine L1 est disposée autour de la pièce 1 et est branchée en parallèle sur un condensateur C1 de capacité réglable, pour former un premier circuit résonant 11. Une autre bobine L2, de mêmes dimensions que la bobine L1 est branchée en parallèle sur un condensateur C2 de capacité réglable, pour former un second circuit résonant 12.

Les circuits 11, 12 sont branchés entre des bornes respectives B1, B2 et une borne à un potentiel de référence (masse). Les bornes B1, B2 sont couplées par des condensateurs respectifs C3, C4 et par un diviseur de tension 13 à la sortie d'un oscillateur 10. Ce dernier fournit un signal à haute fréquence fixe stabilisée par un quartz 10a. Cette fréquence est par exemple comprise entre 10 et 100 MHz. Le diviseur 13 est par exemple de type résistif et est destiné à transmettre le signal de sortie de l'oscillateur de façon symétrique sur les deux branches comportant les circuits 11 et 12.

Les bornes B1 et B2 sont par ailleurs couplées par des condensateurs respectifs C5, C6 aux entrées d'un circuit comparateur 14. Celui-ci comporte des moyens de détection par exemple à diodes D1, D2 branchés entre les bornes B1, B2 et des entrées respectives d'un amplificateur différentiel A. En sortie de ce dernier, on dispose d'un signal de mesure s$_m$ qui représente la différence entre les amplitudes des signaux appliqués à ses entrées, c'est-à-dire, dans ce cas, un signal représentatif de la différence d'amplitude entre les signaux disponibles aux bornes B1 et B2.

Le fonctionnement du détecteur décrit ci-dessus est le suivant.

Lorsque la concentration ionique du liquide dans la pièce tubulaire 1 varie, il se produit une variation correspondante de la self-inductance de la bobine L1 et, par conséquent de la fréquence de résonance du circuit 11. L'amplitude du signal sur la borne B1 varie également. La capacité du condensateur C1 est ajustée de sorte que l'amplitude du signal sur la borne B1 varie de façon monotone (croissante ou décroissante) dans la plage de concentrations à mesurer. En d'autres termes, cette capacité est ajustée de manière que la plage de variation possible de la fréquence de résonance du circuit 11 se situe d'un même côté de la fréquence de l'oscillateur 10 et à proximité de celle-ci.

Le circuit résonant 12 fournit en B2 une tension de référence à laquelle la tension en B1 est comparée de sorte que le signal s$_m$ représente la concentration du liquide dans le tube 1. Pour le réglage de zéro du détecteur, il suffit d'alimenter le tube en eau déminéralisée et d'ajuster la capacité du condensateur C2.

Avec un détecteur réalisé conformément à la figure annexée, on a noté que la relation entre l'amplitude du signal s$_m$ et la concentration ionique est de type logarithmique.

Un avantage important du détecteur conforme à l'invention réside dans le fait que le liquide dont la concentration ionique est à mesurer n'est pas en contact avec des électrodes mais est seulement soumis à un champ alternatif à haute fréquence et de puissance pouvant être très faible.

On notera que, pour une longueur donnée, le diamètre du passage 1a détermine la sensibilité du détecteur. Plus ce diamètre est important, plus la sensibilité est grande. A titre indicatif, une cellule de détection avec un passage d'une longueur de 20 mm et d'un diamètre de 0,5 mm peut permettre de mesurer des concentrations de NaCl, par exemple, comprises entre 0 et 2 M, tandis qu'une cellule avec un passage de même longueur mais d'un diamètre de 2 mm peut permettre de mesurer des concentrations, également de NaCl, comprises entre 0 et 0,1 M.

Selon une variante de réalisation d'un détecteur conforme à l'invention, celui-ci peut alors comporter deux cellules de détection avec des passages centraux de dimensions différentes, l'une étant munie de la bobine L1 et l'autre de la bobine L2. Selon la sensibilité désirée, l'une des cellules est alimentée en liquide dont la concentration est à mesurer tandis que l'autre sert de référence avec son passage central éventuellement rempli d'eau déminéralisée. Chacun des circuits 11 et 12 peut alors servir de circuit à fréquence et résonance variable ou de circuit de référence et des moyens sont prévus pour inverser les liaisons entre ces circuits et le circuit comparateur.

**Revendications**

1. Détecteur de concentration ionique dans un liquide, comportant : une cellule de détection comprenant une pièce tubulaire (1) en matériau électriquement isolant avec un passage central (1a) susceptible d'être alimenté en liquide dont la concentration est à mesurer ; et un circuit électrique comprenant un oscillateur (10), un premier circuit résonant (11) comportant une bobine conductrice (L1) disposée autour de la pièce tubulaire (1) et excité par le signal de sortie de l'oscillateur, et des moyens couplés au circuit résonant (11) pour délivrer un signal de sortie dont les variations représentent les variations de concentration ionique du liquide dans la pièce tubulaire, caractérisé en ce que le circuit électrique comprend un second circuit résonant de référence (12) excité également par le signal à fréquence fixe de sortie de l'oscillateur (10) et un comparateur (14) recevant les signaux produits par les deux circuits résonants (11, 12) et fournissant un signal électrique (s$_m$) dont l'amplitude représente la différence entre les signaux qu'il reçoit et varie en fonction de la concentration ionique du liquide dans la pièce tubulaire (1).

2. Détecteur selon la revendication 1, caractérisé en ce que le premier circuit résonant (11) a une fréquence de résonance qui varie en fonction de la concentration du liquide dans la pièce tubulaire (1), dans une plage située d'un même côté de la fréquence de l'oscillateur (10), à proximité de cette fréquence.

3. Détecteur selon l'une quelconque des revendications 1 et 2, caractérisé en ce que le second circuit résonant comporte une bobine disposée autour d'une seconde pièce tubulaire ayant un passage central de dimensions différentes de celles du passage central de la première pièce tubulaire de manière à former une première et une seconde cellules de détection de sensibilités différentes, chacune de ces cellules pouvant être alimentée en liquide dont la concentration ionique est à mesurer ou pouvant servir de référence.

**Claims**

1. Ionic concentration detector in a liquid comprising : a detection cell containing a tubular part (1) in an electrically insulating material with a central duct (1a) adapted to be supplied with liquid, the concentration of which is to be measured ; and an electrical circuit comprising an oscillator (10), a first resonant circuit (11) provided with a conducting coil (L1) placed around the tubular part (1) and which is energized by the oscillator output signal, and means coupled to the resonant circuit (11) for delivering an output signal, the variations of which represent the variations of ionic concentration of the liquid in the tubular part,
characterized in that the electrical circuit comprises a second reference resonant circuit (12) also energized by the fixed frequency output signal of the oscillator (10) and a comparator (14) receiving the signals produced by the two resonant circuits (11, 12) and supplying an electrical signal ($s_m$) whose amplitude represents the difference between the signals that it receives and varies as a function of the ionic concentration of the liquid inside the tubular part (1).

2. Detector according to claim 1, characterized in that the first resonant circuit (11) has a resonance frequency which varies as a function of the concentration of the liquid inside the tubular part (1), in a range situated on a same side of the oscillator (10) frequency, close to said frequency.

3. Detector according to any one of claims 1 and 2, characterized in that the second resonant circuit comprises a coil placed around a second tubular part having a central duct of different size than that of the central duct of the first tubular part so as to constitute a first and a second detection cells of different sensitivities, each of said cells being adapted to be supplied with liquid, the ionic concentration of which is to be measured, or to act as reference cell.

**Patentansprüche**

1. Detektor für die Ionenkonzentration in einer Flüssigkeit, mit : einer Meßzelle, die ein rohrförmiges Teil (1) aus elektrisch isolierendem Material mit einer zentralen Passage (1a) aufweist, die mit der Flüssigkeit gespeist werden kann, deren Konzentration zu messen ist und mit einer elektrischen Schaltung, die einen Oszillator (10) und einen ersten Resonanzkreis (11) aufweist, der eine leitende Spule (L1) umfaßt, die um das rohrförmige Teil (1) herum angeordnet ist und durch das Ausgangssignal des Oszillators angeregt wird und die Mittel aufweist, die an den Resonanzkreis (11) gekoppelt sind, um ein Ausgangssignal zu liefern, dessen Änderungen die Änderungen der Ionenkonzentration der Flüssigkeit in dem rohrförmigen Stück wiedergeben,
dadurch gekennzeichnet, daß die elektrische Schaltung einen zweiten Resonanz-Bezugskreis (12) aufweist, der ebenfalls durch das Signal mit fester Ausgangsfrequenz des Oszillators (10) gespeist wird und einen Vergleicher (14), der die von den beiden Resonanzschaltungen (11, 12) erzeugten Signale empfängt und ein elektrisches Signal ($s_m$) liefert, dessen Amplitude die Differenz zwischen den Signalen, die er empfängt, wiedergibt und die sich in Abhängigkeit von der Ionenkonzentration der Flüssigkeit im rohrförmigen Stück (1) ändert.

2. Detektor nach Anspruch 1, dadurch gekennzeichnet, daß der erste Resonanzkreis (11) eine Resonanzfrequenz hat, die in Abhängigkeit von der Konzentration der Flüssigkeit im rohrförmigen Stück (1) sich in einem Bereich ändert, der auf einer Seite der Frequenz des Oszillators (10) in der Nähe dieser Frequenz liegt.

3. Detektor nach einem der Ansprüche 1 und 2, dadurch gekennzeichnet, daß der zweite Resonanzkreis eine Spule aufweist, die um ein zweites rohrförmiges Stück angeordnet ist, das eine mittlere Passage hat, mit unterschiedlichen Ausmaßen wie die der mittleren Passage des ersten rohrförmigen Stücks derart, daß erste und zweite Meßzellen mit unterschiedlicher Empfindlichkeit gebildet werden, wobei jede dieser Meßzellen mit Flüssigkeit gespeist werden kann deren Ionenkonzentration zu messen ist oder als Bezugsgröße dienen kann.